# EUROPÄISCHE PATENTANMELDUNG

(11) **EP 4 329 271 A1**
(43) Veröffentlichungstag der Anmeldung: **28.02.2024**
(21) Anmeldenummer: 22192152.1
(22) Anmeldetag: 25.08.2022
(51) Int. Cl.: H04L 67/565, G06F 16/84

(54) **COMPUTERIMPLEMENTIERTES VERFAHREN UND WERKZEUG ZUM STEUERN EINES AUSTAUSCHS VON DATEN ZWISCHEN COMPUTERSYSTEMEN SOWIE COMPUTERSYSTEM**

(71) Anmelder: Siemens Schweiz AG, 8047 Zürich (CH)
(72) Erfinder: WEISS, Johannes, 96170 Lisberg (DE); GMÜNDER, Nadine, 8050 Zürich (CH); OEH, Dominik, 96146 Altendorf (DE)
(74) Vertreter: Siemens Patent Attorneys

(57) **Zusammenfassung**

Um Daten (DT) zwischen einem sendenden Computersystem (CSₛ) und einem empfangenden Computersystem (CS_{E}) über zueinander inkompatible Schnittstellen, eine Sendeschnittstelle (SS) des sendenden Computersystems zum Transport der Daten in einem Sendedatenformat (SDTF) und eine Empfangsschnittstelle (ES) des empfangenden Computersystems zum Transport der Daten in einem Empfangsdatenformat (EDTF), zu übertragen, so dass die ausgetauschten Daten auf Empfangsseite selbst bei der Verwendung von proprietären, nicht standardisierten Schnittstellen der am Datenaustausch beteiligten Computersysteme inhaltlich weiterverarbeitet werden können, wird es vorgeschlagen, **<A>** eine deklarative Datentransformationsarchitektur (DTTA) zum Aufbereiten von zu erkennenden, mit der Übertragung der Daten transportierten Dateninformationen (DTI, DTI_{SDTF}) zu erzeugen (ezg), indem <**i**> Dateninformationsmodelle (DTIM_{SS}, DTIM_{ES}) der Schnittstellen semantisch beschrieben (bsc) und dabei schnittstellenbezogene Dateninformationssemantiken in "Resource Description Framework <RDF>"-Formate (F1, F2) dokumentiert (dkm) werden, <**ii**> Schnittstellen-Annotation (SSA, ESA) zum regelbasierten Beschreiben eines Abbildens der zu transportierenden Dateninformation auf die schnittstellenbezogenen, semantischen Dateninformationsmodell implementiert (ipl) werden, <**iii**> ein Dateninformationsmodell-Mapping (DTIM-M) zum regelbasierten "DIM_{SS} auf DTIM_{ES}"-Abbilden der Dateninformationsmodelle implementiert wird, und <**B**> das Datentransformationsarchitektur-basierte Aufbereiten Dateninformationen (DTI_{SDTF}) im Sendedatenformat bis hin zu erkannten, äquivalenten Dateninformationen (DTI_{EDTF}) im Empfangsdatenformat unter Einsatz der Dateninformationsmodelle und Einbindung der RDF-Formate, der Schnittstellen-Annotation und des Dateninformationsmodell-Mapping erfolgt.

## Beschreibung

Die Erfindung betrifft ein computerimplementiertes Verfahren zum Steuern eines Austauschs von Daten zwischen Computersystemen gemäß dem Oberbegriff des Patentanspruches 1, ein computerimplementiertes Werkzeug zum Steuern eines Austauschs von Daten zwischen Computersystemen gemäß dem Oberbegriff des Patentanspruches 6 sowie Computersystem gemäß dem Oberbegriff des Patentanspruches 9.

Als Computersystem wird allgemein eine technische Vorrichtung für die digitale Informationsverarbeitung verstanden. Dabei umfasst der Begriff einerseits die Gesamtheit aller externen und internen Komponenten (betreffend Hard- und Software) eines einzelnen Rechners und andererseits einen Verbund, ein Netzwerk aus mehreren Rechnern bzw. Computern, die individuell gesteuert werden und auf gemeinsam genutzte Daten und Geräte zugreifen können.

Typische, dieser Definition folgende Computersystem sind beispielsweise ein Personal Computer, ein Notebook, ein Tablet, eine Workstation, Embedded Systeme (z.B. PC's im industriellen Umfeld), Mainframes (Großrechner), Hochleistungssysteme (z.B. Server, Client-Server-basierte Systemarchitekturen) Quantencomputer etc.

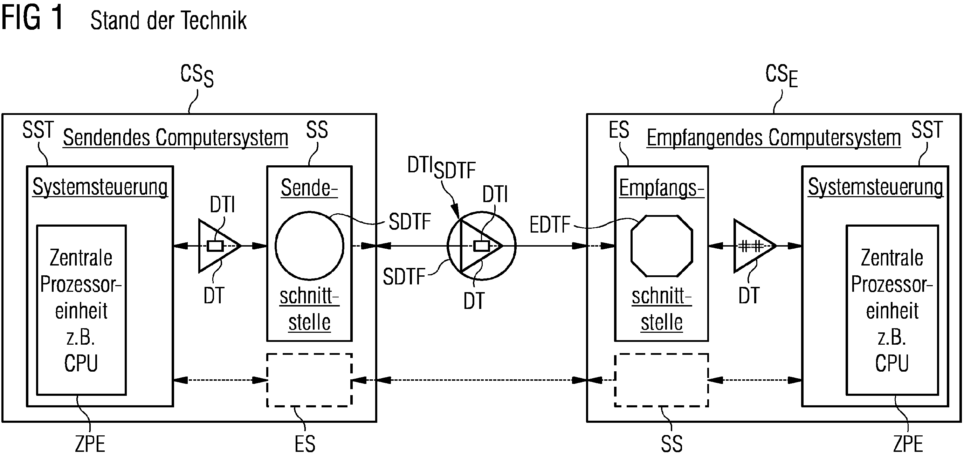

FIGUR 1 zeigt ein typisches, allgemein bekanntes Szenario zum Austauschen von Daten DT zwischen zwei Computersystemen, einem sendenden Computersystem CS_{S} mit einer Systemsteuerung SST, die z.B. eine als CPU (Central Processing Unit) ausgebildete Zentrale Prozessoreinheit ZPE aufweist, und einer mit der Systemsteuerung SST verbundenen Sendeschnittstelle SS sowie einem empfangenden Computersystem CS_{E} mit einer Systemsteuerung SST, die z.B. wieder eine als CPU (Central Processing Unit) ausgebildete Zentrale Prozessoreinheit ZPE aufweist, und einer mit der Systemsteuerung SST verbundenen Empfangsschnittstelle ES, wobei die Sendeschnittstelle SS und die Empfangsschnittstelle ES zueinander inkompatibel sind.

Die Daten DT werden dabei über die zueinander inkompatiblen Schnittstellen SS, ES derart übertragen, dass die Daten DT über die Sendeschnittstelle SS in einem Sendedatenformat SDTF und die Daten DT über die Empfangsschnittstelle ES in einem Empfangsdatenformat EDTF transportiert werden.

Mit den Daten DT wird dabei ein Dateninhalt in Form von Dateninformationen DIF transportiert, den bzw. die es auf der empfangenden Seite trotz der Inkompatibilität der Schnittstellen SS, ES und der verschiedenen Datenformate SDTF, EDTF zu erkennen gilt. In dem dargestellten Szenario wird der Dateninhalt bzw. die Dateninformation DTI von der Empfangsschnittstelle ES nicht erkannt (dargestellt in der FIGUR 1 durch zwei ##-Zeichen als Dateninhalt).

In der FIGUR 1 ist eine Datenübertragungsrichtung von dem sendenden Computersystem CS_{S} zu dem empfangenden Computersystem CS_{E} dargestellt.

Es sei an dieser Stelle angemerkt, dass auch eine entgegengesetzte Datenübertragungsrichtung grundsätzlich in Frage kommt. So ist auch eine Datenübertragung von dem empfangenden Computersystem CS_{E} zu dem sendenden Computersystem CS_{S} möglich. Aus diesem Grund weist das empfangende Computersystem CS_{E} neben der Empfangsschnittstelle ES auch die Sendeschnittstelle SS auf. Entsprechendes gilt für das sendende Computersystem CS_{S}, das neben der bereits erwähnten Sendeschnittstelle SS für die entgegengesetzte Datenübertragungsrichtung die Empfangsschnittstelle ES aufweist. In der FIGUR 1 ist dieses Szenario in der entgegengesetzte Datenübertragungsrichtung durch die gestrichelt dargestellte Sendeschnittstelle SS in dem empfangenden Computersystem CS_{E} und die gestrichelt dargestellte die Empfangsschnittstelle ES in dem sendenden Computersystem CS_{S} angedeutet.

Unabhängig von der Datenübertragungsrichtung muss es also stets das Ziel sein, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen Datenformaten SDTF, EDTF jeweils transportierte Dateninhalt bzw. die Dateninformation DTI inhaltlich von beiden Computersystemen CS_{S}, CS_{E} verarbeitet werden kann.

Beispiel: Der transportierte Dateninhalt bzw. die Dateninformation beschreibt einen Sensor, der in der Lage ist, eine Temperatur auszulesen und zu versenden.

Die Informationsobjekte können nun beispielsweise, wie in der im Annex angehängten grafischen Darstellung (Bild-1) gezeigt, aussehen.

In dem Beispiel ist es vorgesehen, dass ein Computersystem CS1 die Information 37 Grad Celsius der Messung von Sensor A an ein Computersystem CS2 überträgt. Das Computersystem CS2 versteht allerdings nichts von einem "DataObject" des Computersystem CS1 und modelliert Temperaturen ganz anders. Inhaltlich ist jedoch die Information "37 Grad Celsius von Sensor A" identisch.

Um das angegeben Ziel gemäß dem aufgezeigten Beispiel zu erreichen, sind folgende zwei Lösungsvorschläge bekannt.

Im einfachsten Fall gemäß einem ersten Lösungsvorschlag wird ein Adapter entwickelt, der als Mediator zwischen den , ersten Lösungsvorschlag beiden Computersystemen dient. Dieser Adapter enthält Programmlogik, die ein Informationsmodell des Computersystems CS1 in ein Informationsmodell Computersystems CS1 übersetzt.

Nachteil dieses ersten Lösungsvorschlags: Ein Adapter hilft hier immer nur punktuell (Punkt-zu-Punkt), da er von einer konkreten Schnittstelle in eine andere konkrete Schnittstelle übersetzt. Der Adapter muss entwickelt und getestet werden. Der Adapter unterliegt einer Veränderung, sobald sich eine der Schnittstellen der Computersysteme CS1, CS2 ändert. D.h. der Adapter muss entsprechend immer aktualisiert werden.

Ein zweiter Lösungsvorschlag ist, dass sich die Computersysteme CS1, CS2 auf ein Datenaustauschformat einigen. Die Definition eines solchen Formats ist sehr aufwändig und dauert sehr lange. Jedes beteiligte Computersystem CS1, CS2 muss sich dann entsprechend der Konvention unterwerfen. Solche Standardisierungen werden häufig bei Schnittstellen angewendet, wo häufig und viele Daten ausgetauscht werden und sich der Aufwand für eine Standardisierung entsprechend lohnt. In der Praxis sind jedoch viele Schnittstellen nicht standardisiert.

Die der Erfindung zugrundeliegende Aufgabe besteht darin, ein computerimplementiertes Verfahren und Werkzeug zum Steuern eines Austauschs von Daten zwischen Computersystemen sowie ein Computersystem anzugeben, bei dem die ausgetauschten Daten auf Empfangsseite selbst bei der Verwendung von proprietären, nicht standardisierten Schnittstellen der am Datenaustausch beteiligten Computersysteme inhaltlich weiterverarbeitet werden können.

Die vorstehend bezeichnete Aufgabe wird ausgehend von dem im Oberbegriff des Patentanspruchs 1 definierten computerimplementierte Verfahren durch die im Kennzeichen des Patentanspruches 1 angegebenen Merkmale gelöst.

Weiterhin wird diese Aufgabe ausgehend von dem im Oberbegriff des Patentanspruchs 6 definierten computerimplementierten Werkzeug durch die im Kennzeichen des Patentanspruches 6 angegebenen Merkmale gelöst.

Darüber hinaus wird diese Aufgabe von dem im Oberbegriff des Patentanspruchs 9 definierten Computersystem durch die im Kennzeichen des Patentanspruches 9 angegebenen Merkmale gelöst.

Die der Erfindung zugrundeliegende Idee gemäß der in den Ansprüchen 1, 6 und 9 jeweils angegebenen technischen Lehre besteht darin, wenn Daten zwischen einem sendenden Computersystem und einem empfangenden Computersystem über zueinander inkompatible Schnittstellen, eine Sendeschnittstelle des sendenden Computersystems zum Transport der Daten in einem Sendedatenformat und eine Empfangsschnittstelle des empfangenden Computersystems zum Transport der Daten in einem Empfangsdatenformat, übertragen werden, dass
**1**) eine deklarative Datentransformationsarchitektur zum Aufbereiten von zu erkennenden, mit der Übertragung der Daten transportierten Dateninformationen erzeugt wird, indem <**i**> Dateninformationsmodelle der Schnittstellen semantisch beschrieben und dabei schnittstellenbezogene Dateninformationssemantiken in "Resource Description Framework <RDF>"-Formate dokumentiert werden, <**ii**> Schnittstellen-Annotation zum regelbasierten Beschreiben eines Abbildens der zu transportierenden Dateninformation auf die schnittstellenbezogenen, semantischen Dateninformationsmodell implementiert werden, <**iii**> ein Dateninformationsmodell-Mapping zum regelbasierten "DIM_{SS} auf DTIM_{ES}"-Abbilden der Dateninformationsmodelle implementiert wird,
**2**) das Datentransformationsarchitektur-basierte Aufbereiten Dateninformationen im Sendedatenformat bis hin zu äquivalenten, erkannten Dateninformationen im Empfangsdatenformat unter Einsatz der Dateninformationsmodelle und Einbindung der "Resource Description Framework <RDF>"-Formate, der Schnittstellen-Annotation und des Dateninformationsmodell-Mapping erfolgt.

Die vorgeschlagene Lösung zeichnet sich insbesondere dadurch aus, dass Computersysteme und deren Schnittstellen deutlich flexibler für den Datenaustausch miteinander ausgestaltet werden können. Der Verarbeitungsprozess zum Aufbereiten der zu erkennenden, mit der Übertragung der Daten transportierten Dateninformationen muss nicht originär von einem beteiligten Computersystem bereitgestellt werden, sondern dieser kann zu jedem Zeitpunkt einerseits nachträglich und andererseits auch von jedem, anderen beliebigen Computersystem ausgeführt werden.

Es ist nicht mehr notwendig für jede Integration von Schnittstellen einen dedizierten aus dem Stand der Technik bekannten Adapter zu entwickeln. Das notwendige Dateninformationsmodell-Mapping zwischen den Dateninformationsmodell der Schnittstellen muss sowieso von Domänenexperten bewertet und beschrieben werden. Mit dem neuen Ansatz können die Domänenexperten selbst das Dateninformationsmodell-Mapping definieren und müssen nicht einem Domänenfremden Softwareentwickler die notwendige Adapterlogik erläutern.

Die bekannten Werkzeuge zum operativen Ausführen der Übersetzungsleistung müssen nicht angepasst werden und bleiben stabil und können so entsprechend auf optimale Ausführperformance optimiert werden.

Jedes beteiligte Computersystem behält die Freiheit seine Schnittstellen proprietär zu entwerfen. Damit gewinnt man Geschwindigkeit und ist schneller am Markt. Interoperabilitäten können zu einem späteren Zeitpunkt dazu gebracht werden.

Falls sich ein Datenstandard etablieren sollte, ist man mit dem vorgeschlagenen Ansatz auch in der Lage Daten von einem proprietären Format in den Standard zu heben und muss nicht zwangsweise das existierende Computersystem verändern und dort den Standard implementieren.

Weitere Vorteile der Erfindung ergeben sich aus den Unteransprüchen.

Das Regelwerk, mit dem gemäß der Weiterbildung der Erfindung in den Ansprüchen 2 und 6 die Schnittstelle-Annotation für das Abbilden der zu transportierenden Dateninformation auf das schnittstellenbezogene, semantische Dateninformationsmodell regelbasiert beschrieben wird, ist eine "JavaScript Object Notation <JSON>-based Serialization for Linked Data <JSON-LD>"-Spezifikation (vgl. https://json-ld.org/spec/latest/json-ld/), das ein Datenserialisierungs- und Nachrichtenformat zum Serialisieren von verknüpften Daten ist.

Das Regelwerk für das Dateninformationsmodell-Mapping, mit dem gemäß der Weiterbildung der Erfindung in den Ansprüchen 3 und 7 das sendeschnittstellenbezogene, semantische Dateninformationsmodell auf das empfangsschnittstellenbezogene, semantische Dateninformationsmodell regelbasiert abgebildet wird, basiert auf einer "Web Ontology Language <OWL>"-Spezifikation (vgl. https://www.w3.org/TR/owl-features/).

Das Regelwerk für das Dateninformationsmodell-Mapping, mit dem gemäß der Weiterbildung der Erfindung in den Ansprüchen 4 und 8 alternativ oder zusätzlich das sendeschnittstellenbezogene, semantische Dateninformationsmodell auf das empfangsschnittstellenbezogene, semantische Dateninformationsmodell regelbasiert abgebildet wird, basiert auf einer "Shapes Constraint Language <SHACL>"-Spezifikation (vgl. https://www.w3.org/TR/shacl/) in Kombination mit einer "SPARQL Protocol And RDF Query Language <SPARQL>"-Spezifikation (vgl. https://www.w3.org/TR/rdf-sparql-query/).

Die deklarative Datentransformationsarchitektur, mit der im Zuge der Datenaustauschsteuerung die zu erkennenden, mit der Übertragung der Daten transportierten Dateninformationen aufbereitet werden, zeichnet sich dadurch aus, dass das Steuerungsverhalten des Datenaustauschs zwischen den Computersystemen beeinflusst werden kann. Die Deklaration ist eine maschinenlesbare Beschreibung von Daten, die über eine Schnittstelle transportiert werden.

Beispielsweise kann damit ausgedrückt werden, dass eine Zahl, so z.B. ein Datum, was über die Schnittstelle transportiert wird, eine Temperatur in der Einheit "Grad Celsius <°C>" ist. Diese Deklaration wird an jeder beteiligten Schnittstelle vorgenommen. Die Deklarationen können dann mithilfe von Regeln zueinander gemappt werden. So kann z.B. eine Regel bestimmen, dass die oben genannte Temperatur in der Einheit "Grad Celsius <°C>" auch als Temperatur in der Einheit "Kelvin" ausgedrückt werden kann. In diesem Fall ändert sich die eigentliche Zahl, da die Einheiten "Kelvin" und "Grad Celsius <°C>" unterschiedliche Nullpunkte haben.

Ein anderes Beispiel: In einer Schnittstelle S1 wird ein Datum D1 als Sensor deklariert, ein weiteres Datum D2 als Maßeinheit "Grad Celsius <°C>" deklariert und eine Relation R1 zwischen dem Datum D1 und dem Datum D2 als Konfiguration der Maßeinheit des Sensors deklariert. In einer weiteren Schnittstelle S2 gibt es nur ein zusätzliches Datum D3 das als Temperatursensor deklariert wird. In diesem Fall ist es möglich durch eine Regel zu sagen, wenn das Datum D1 und das Datum D2 in Beziehung zueinander stehen und das Datum D2 die Maßeinheit "Grad Celsius <°C>" hat, dann ist das Datum D3 ein Temperatursensor.

Die deklarative Datentransformationsarchitektur erzielt dabei folgende technische Wirkungen:
1. Mit der Angabe von deklarativen Beschreibungen und Regeln ist es möglich auf das Steuerungsverhalten des Datenaustauschs zwischen den Computersystemen Einfluss zu nehmen. So ist es möglich weitere Schnittstellen anzubinden, ohne dass an der bereits bestehenden Computersystem-Konstellation zum Austausch von Daten Änderungen, z.B. durch einen Computersystem-Austausch, vorgenommen werden müssen.
2. Die Angabe von deklarativen Beschreibungen und Regeln erlaubt eine automatisierte Weiterverarbeitung von Daten in andere Computersysteme, die keine eingebaute Schnittstellen zum sendenden Computersystem bereitstellen. Somit ist sichergestellt, dass die Weitergabe von Daten vollständig und korrekt abläuft und eine erneute manuelle Eingabe nicht mehr erforderlich ist.

Das Problem der Verbindung von zwei nicht-schnittstellenkompatiblen Computersystemen zum Austausch von Daten wird bislang - wie eingangs bereits erwähnt - durch die Entwicklung eines dedizierten Adapters (auch als Konnektor genannt) realisiert. Diese Herangehensweise hat den bereits erwähnten Nachteil, dass das lediglich eine Punkt-zu-Punkt Verbindung zwischen den beteiligten Computersystemen realisiert werden kann. Ändert sich eines der Computersysteme an der Schnittstelle muss der Adapter entsprechend selbst angepasst werden. Soll z.B. ein neues/anderes Computersystem angebunden werden, so muss ein neuer Adapter entwickelt werden. Mit der vorstehend skizzierten Erfindung ist dies nicht mehr notwendig, da die Anbindung neuer/anderer Computersysteme durch die Deklaration von Daten an der Schnittstelle zur Laufzeit eingebunden werden kann.

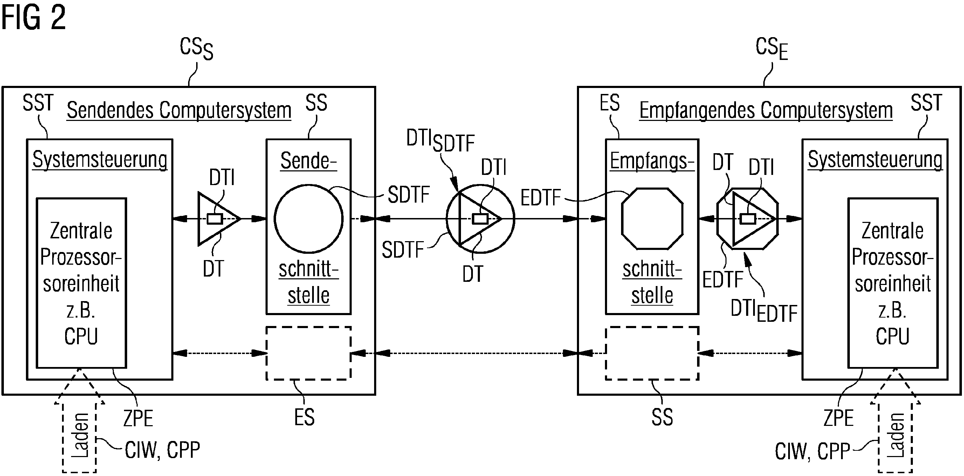

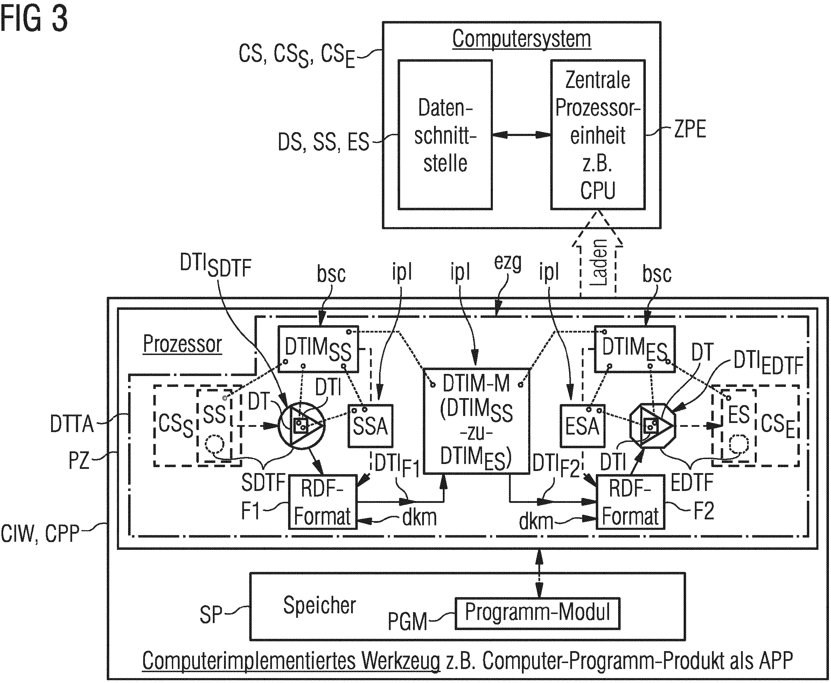

Weitere Vorteile der Erfindung ergeben sich aus der nachfolgenden Beschreibung eines Ausführungsbeispiels der Erfindung anhand der FIGUREN 2 und 3 erläutert. Diese zeigen:
FIGUR 2 ausgehend von der FIGUR 1 ein zur Zielerreichung modifiziertes Szenario zum Austauschen von Daten zwischen zwei Computersystemen,
FIGUR 3 ein computerimplementiertes Werkzeug zum Steuern des Austauschs der Daten zwischen den Computersystemen zur Zielerreichung des modifizierten Szenarios gemäß der FIGUR 2.

FIGUR 2 zeigt ein ausgehend von der FIGUR 1 ein zur Zielerreichung modifiziertes Szenario zum Austauschen von Daten DT zwischen zwei Computersystemen, einem sendenden Computersystem CS_{S} mit einer Systemsteuerung SST, die z.B. eine als CPU (Central Processing Unit) ausgebildete Zentrale Prozessoreinheit ZPE aufweist, und einer mit der Systemsteuerung SST verbundenen Sendeschnittstelle SS sowie einem empfangenden Computersystem CS_{E} mit einer Systemsteuerung SST, die z.B. wieder eine als CPU (Central Processing Unit) ausgebildete Zentrale Prozessoreinheit ZPE aufweist, und einer mit der Systemsteuerung SST verbundenen Empfangsschnittstelle ES, wobei die Sendeschnittstelle SS und die Empfangsschnittstelle ES zueinander inkompatibel sind.

Die Daten DT werden dabei über die zueinander inkompatiblen Schnittstellen SS, ES derart übertragen, dass die Daten DT über die Sendeschnittstelle SS in einem Sendedatenformat SDTF und die Daten DT über die Empfangsschnittstelle ES in einem Empfangsdatenformat EDTF transportiert werden.

Mit den Daten DT wird dabei ein Dateninhalt in Form von Dateninformationen DIF transportiert, den bzw. die es auf der empfangenden Seite trotz der Inkompatibilität der Schnittstellen SS, ES und der verschiedenen Datenformate SDTF, EDTF zu erkennen gilt. Im Unterschied zu dem in der FIGUR 1 dargestellten Szenario wird in dem in der FIGUR 2 dargestellten modifizierten Szenario der Dateninhalt bzw. die Dateninformation DTI von der Empfangsschnittstelle ES erkannt. Das Erkennen erfolgt dabei durch ein computerimplementiertes Werkzeug CIW, das beispielsweise ausgebildet als APP-basiertes Computer-Programm-Produkt zu diesem Zweck in die Zentrale Prozessoreinheit ZPE des Computersystems CS_{S}, CS_{E} geladen wird. Wie das computerimplementiertes Werkzeug CIW ausgebildet ist und funktioniert, wird mit Beschreibung von FIGUR 3 erläutert.

In der FIGUR 2 ist auch wieder eine Datenübertragungsrichtung von dem sendenden Computersystem CS_{S} zu dem empfangenden Computersystem CS_{E} dargestellt.

Es sei deshalb auch an dieser Stelle angemerkt, dass auch eine entgegengesetzte Datenübertragungsrichtung grundsätzlich in Frage kommt. So ist auch eine Datenübertragung von dem empfangenden Computersystem CS_{E} zu dem sendenden Computersystem CS_{S} möglich. Aus diesem Grund weist das empfangende Computersystem CS_{E} neben der Empfangsschnittstelle ES auch die Sendeschnittstelle SS auf. Entsprechendes gilt für das sendende Computersystem CS_{S}, das neben der bereits erwähnten Sendeschnittstelle SS für die entgegengesetzte Datenübertragungsrichtung die Empfangsschnittstelle ES aufweist. In der FIGUR 2 ist dieses Szenario in der entgegengesetzte Datenübertragungsrichtung auch wieder durch die gestrichelt dargestellte Sendeschnittstelle SS in dem empfangenden Computersystem CS_{E} und die gestrichelt dargestellte die Empfangsschnittstelle ES in dem sendenden Computersystem CS_{S} angedeutet.

Unabhängig von der Datenübertragungsrichtung wird durch das Erkennen der Dateninformation DTI jenes Ziel erreicht, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen Datenformaten SDTF, EDTF jeweils transportierte Dateninhalt bzw. die Dateninformation DTI inhaltlich von beiden Computersystemen CS_{S}, CS_{E} verarbeitet werden kann.

FIGUR 3 zeigt das als das APP-basierte Computer-Programm-Produkt CPP ausgebildete computerimplementierte Werkzeug CIW zum Steuern des Austauschs der Daten DT zwischen den Computersystemen CS_{S}, CS_{E} zur Zielerreichung des modifizierten Szenarios gemäß der FIGUR 2.

Das computerimplementierte Werkzeug CIW enthält einen nicht-flüchtigen, lesbaren Speicher SP, in dem prozessorlesbare Steuerprogrammbefehle eines Programm-Moduls PGM zum Steuern des Austauschs der Daten DT zwischen den Computersystemen CS_{S},CS_{E} gespeichert sind, und einen mit dem Speicher SP verbundenen Prozessor PZ, der die Steuerprogrammbefehle des Programm-Moduls PGM zum Steuern des Austauschs der Daten DT zwischen den Computersystemen CS_{S},CS_{E} ausführt.

Das Programm-Modul PGM und der die Steuerprogrammbefehle des Programm-Moduls PGM zum Steuern des Austauschs der Daten DT zwischen den Computersystemen CS_{S},CS_{E} ausführende Prozessor (PZ) derart ausgebildet sind, dass, wenn die Daten DT zwischen dem sendenden Computersystem CS_{S} und dem empfangenden Computersystem CS_{E} über zueinander inkompatible Schnittstellen SS, ES in dem Sendedatenformat SDTF gesendet und in dem Empfangsdatenformat EDTF empfangen werden [Anmerkung: Dieser Zustand ist in der FIGUR 3 in dem Prozessor PZ durch gepunktete Darstellungen der Computersystemen CS_{S},CS_{E} angedeutet], eine deklarativen Datentransformationsarchitektur DTTA im Zuge der Datenaustauschsteuerung zum Aufbereiten von für eine Weiterverarbeitung der übertragenen Daten DT durch das empfangende Computersystem CS_{E} zu erkennenden, mit der Übertragung der Daten DT transportierten Dateninformationen DTI erzeugt ezg wird.

Da die transportierten Dateninformationen DTI in dem Sendedatenformat SDTF transportiert werden, sind dies in dem Sendedatenformat SDTF transportierte Dateninformationen DTI_{SDTF}.

Die deklarative Datentransformationsarchitektur DTTA wird erzeugt ezg durch folgende Maßnahmen:
**1.** Es werden Dateninformationsmodelle der Schnittstellen, ein sendeschnittstellenbezogenes Dateninformationsmodell DTIM_{SS} sowie ein empfangsschnittstellenbezogenes Dateninformationsmodell DTIM_{ES}, semantisch beschrieben bsc und dabei sendeschnittstellenbezogene Dateninformationssemantiken in einem ersten "Resource Description Framework <RDF>"-Format F1 und empfangsschnittstellenbezogene Dateninformationssemantiken in einem zweiten "Resource Description Framework <RDF>"-Format F2 dokumentiert dkm.

[Anmerkung: Die Schnittstellen- und Dateninformation-Bezogenheit der Dateninformationsmodelle ist durch in der FIGUR 3 gepunktet dargestellten Strecken angedeutet].

Bei der semantischen Beschreibung der Dateninformationsmodelle der Schnittstellen bedeutet "semantisch", dass die Daten möglichst präzise beschrieben werden, welche Dateninformation in den Daten steckt und welche entsprechend transportiert wird. Zur Dokumentation der Dateninformationssemantik wird das "Resource Description Framework <RDF>"-Format https://www.w3.org/TR/rdfll-concepts/n) verwendet. Das heißt, jede beteiligte Schnittstelle ist dateninformationssemantisch vollständig mit dem RDF-Format beschrieben.

**2.** Es werden eine Sendeschnittstelle-Annotation SSA zum regelbasierten Beschreiben eines Abbildens der zu transportierenden Dateninformation DTI, DTI_{SDTF} auf das sendeschnittstellenbezogene, semantische Dateninformationsmodell DTIM_{SS} und eine Empfangsschnittstelle-Annotation ESA zum regelbasierten Beschreiben eines Abbildens der zu transportierenden Dateninformation DTI, DTI_{SDTF} auf das empfangsschnittstellenbezogene, semantische Dateninformationsmodell DTIM_{ES} implementiert ipl. [Anmerkung: Die Schnittstellen- und Dateninformation-Bezogenheit der Sendeschnittstelle-Annotation bzw. Empfangsschnittstelle-Annotation wird jeweils durch in der FIGUR 3 gepunktet dargestellten Strecken angedeutet].

Neben dem semantischen Dateninformationsmodell bekommt jede Schnittstelle noch eine Annotation, um zu beschreiben, wie sich die tatsächlich zu transportierende Dateninformation auf die semantische Beschreibung abbildet. Das kann dafür verwendet werden, um die tatsächliche Dateninformation in das erste RDF-Format F1 zu verwandeln und aus dem zweiten RDF-Format F2 wieder zurück. Die Schnittstellen-Annotation kann vorzugsweise als ein Datenserialisierungs- und Nachrichtenformat zum Serialisieren von verknüpften Daten für "JavaScript Object Notation <JSON>"-basierte Schnittstellen mittels "JavaScript Object Notation <JSON>-based Serialization for Linked Data <JSON-LD>"-Spezifikation (https://json-ld.org/spec/latest/json-ld/) realisiert werden. Für andere Schnittstellen werden andere Schnittstellen-Annotationen benötigt.

3. Es wird ein Dateninformationsmodell-Mapping DTIM-M zum regelbasierten Abbilden des sendeschnittstellenbezogenen, semantischen Dateninformationsmodells DTIM_{SS} auf das empfangsschnittstellenbezogene, semantische Dateninformationsmodell DTIM_{ES} implementiert ipl.

[Anmerkung: Die Dateninformationsmodell-Bezogenheit des Dateninformationsmodell-Mapping wird durch in der FIGUR 3 gepunktet dargestellten Strecken angedeutet].

Das Dateninformationsmodell-Mapping DTIM-M basiert vorzugsweise auf einer "Web Ontology Language <OWL>"-Spezifikation (vgl. https://www.w3.org/TR/owl-features/) und ist dabei als ein "OWL-Reasoner" ausgeführt. Ein solcher "OWL-Reasoner" ist in der Lage anhand der definierten Mappings der semantischen Dateninformationsmodelle die konkreten Daten von der einen RDF-Sprache mit dem ersten RDF-Format F1 in die andere RDF-Sprache mit dem zweiten RDF-Format F2 zu übersetzen.

Alternative oder zusätzlich kann das Dateninformationsmodell-Mapping DTIM-M auf einer "Shapes Constraint Language <SHACL>"-Spezifikation (vgl. https://www.w3.org/TR/shacl/)in Kombination mit einer "SPARQL Protocol And RDF Query Language < SPARQL>"-Spezifikation (vgl. https://www.w3.org/TR/rdfsparql-query) basieren.

Mit der SHACL/SPARQL-Spezifikation können Regeln so definiert und auf den die Daten angewendet werden, dass, wenn die verfügbaren OWL-Sprach-Konstrukte nicht mehr ausreichen und komplexeren Sachverhalte realisiert werden müssen, ein Mapping dennoch möglich ist.

Das Programm-Modul PGM und der die Steuerprogrammbefehle des Programm-Moduls PGM zum Steuern des Austauschs der Daten DT zwischen den Computersystemen CS_{S},CS_{E} ausführende Prozessor PZ sind weiterhin derart ausgebildet, dass
das Datentransformationsarchitektur-basierte Aufbereiten der für die Weiterverarbeitung der übertragenen Daten DT durch das empfangende Computersystem CS_{E} zu erkennenden, mit der Datenübertragung transportierten Dateninformationen DTI, DTI_{SDTF} in der Weise abläuft, dass
- aus den in dem Sendedatenformat SDTF transportierten Dateninformationen DTI_{SDTF} unter Einsatz der Sendeschnittstelle-Annotation SSA und dabei dem sendeschnittstellenbezogenen, semantischen Dateninformationsmodell DTIM_{SS} folgend in das erste "Resource Description Framework <RDF>"-Format F1 überführte Dateninformationen DTI_{F1} erzeugt werden,
- aus den in das erste RDF-Format F1 überführte Dateninformationen DTI_{F1} unter Einsatz <**i**> des sendeschnittstellenbezogenen, semantischen Dateninformationsmodells DTIM_{SS}, <**ii**> des empfangsschnittstellenbezogenen, semantischen Dateninformationsmodells DTIM_{ES} und <**iii**> des Dateninformationsmodell-Mapping DTIM-M und dabei dem empfangsschnittstellenbezogenen, semantischen Dateninformationsmodell DTIM_{ES} folgend in das zweite "Resource Description Framework <RDF>"-Format F2 überführte Dateninformationen DTI_{F2} erzeugt werden,
- aus den in das zweite RDF-Format F2 überführten Dateninformationen DTI_{F2} unter Einsatz der Empfangsschnittstelle-Annotation ESA und dabei dem empfangsschnittstellenbezogenen, semantischen Dateninformationsmodell DTIM_{ES} folgend in das Empfangsdatenformat EDTF überführte Dateninformationen DTI_{EDTF} erzeugt werden, die zu den in dem Sendedatenformat SDTF transportierten Dateninformationen DTI_{SDTF} äquivalent sind.

In einer im Annex angehängten grafischen Darstellung (Bild-2), die auf das Bild-1 basiert, ist dieser Ablauf mit dem das Dateninformationsmodell-Mapping DTIM-M ausführenden "OWL-Reasoner" visualisiert.

Im Kontext des visualisierten Ablaufs gibt es z.B. folgende Annotationen und "OWL-Reasoner"-Mapping-Regeln:
- Annotationen CS1
   o "sensor" ist ein cs1:sensor und enthält einen String als Wert
   o "value" ist ein cs1:value und enthält eine Zahl als Wert
   o "unit" ist ein csl:unit und enthält einen String als Wert
   o cs1:sensor", cs1:value" und csl:unit gehören zur Klasse csl:DataObject
- Annotationen CS2
   o "device" ist ein cs2:device und enthält einen String als Wert
   o "temp" ist ein cs2:temp und enthält eine Zahl als Wert
   o cs2:device und cs2:temp gehören zur Klasse cs2:TempCelsius
- "OWL-Reasoner"-Mapping-Regeln
   o Ein csl:DataObject ist äquivalent zu cs2:TempCelsius, wenn csl:unit den Wert "Celsius" enthält
   o cs1:sensor ist äquivalent zu cs2:device und gehört zur selben Klasse, die äquivalent zu csl:DataObject ist
   o cs1:value ist äquivalent zu cs2:temp und gehört zur selben Klasse, die äquivalent zu csl:DataObject ist.

Das computerimplementierte Werkzeug CIW mit den dargestellten und vorstehend beschriebenen Komponenten kann jetzt, um den Austausch der Daten DT zwischen den Computersystemen CS_{S}, CS_{E} zur Zielerreichung des modifizierten Szenarios gemäß der FIGUR 2 steuern zu können, in ein beliebiges Computersystem CS geladen werden. Das Computersystem CS enthält wie die Computersysteme CS_{S},CS_{E} die Zentrale Prozessoreinheit ZPE und eine Datenschnittstelle DS, die mit der Zentralen Prozessoreinheit ZPE verbunden ist. Das Laden des computerimplementierten Werkzeugs CIW erfolgt - wie bereits im Zusammenhang mit der Beschreibung der FIGUR 2 erwähnt - in die Zentrale Prozessoreinheit ZPE.

Das Computersystem CS kann z.B. ein am Datenaustausch nicht beteiligtes eigenständiges Computersystem sein. Aber natürlich auch - wie bereits im Zusammenhang mit der Beschreibung der FIGUR 2 erwähnt - das Computersystem CS_{S},CS_{E}.

Das eigenständige Computersystem CS ist ein Computersystem, das unabhängig von dem im Zuge des Datenaustauschs zwischen Computersystemen vorhandenen, sendenden Computersystem CS_{S} zum Senden der Daten DT und/oder dem im Zuge des Datenaustauschs zwischen Computersystemen vorhandenen, empfangenden Computersystem CS_{E} zum Empfangen der Daten DT betrieben wird, aber zur Steuerung des Datenaustauschs sowohl dem sendenden Computersystem CS_{S} als auch dem empfangenden Computersystem CS_{E} zugeordnet wird.

### Annex

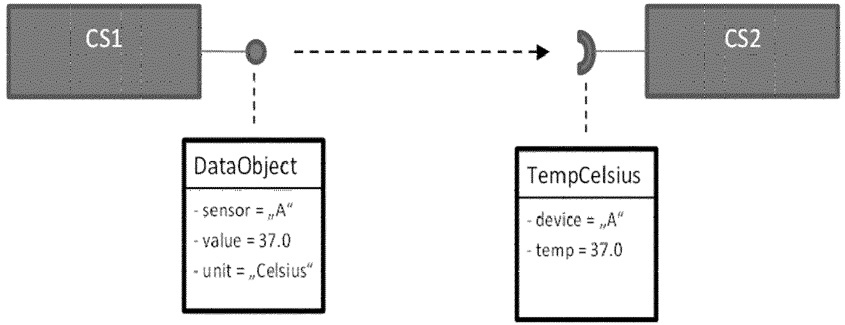

Bild-1 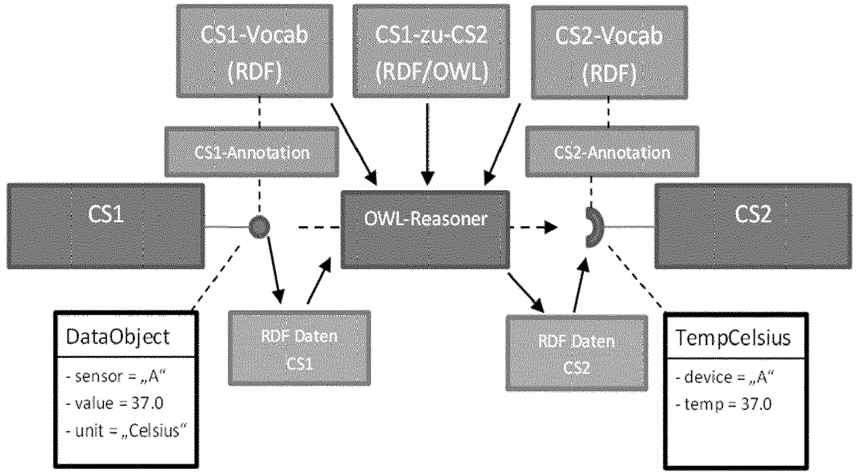
Bild-2

## Patentansprüche

1. Computerimplementiertes Verfahren zum Steuern eines Austauschs von Daten zwischen Computersystemen, bei dem Daten (DT) zwischen einem sendenden Computersystem (CS_{S}) und einem empfangenden Computersystem (CS_{E}) über zueinander inkompatible Schnittstellen, eine Sendeschnittstelle (SS) des sendenden Computersystems (CS_{S}) zum Transport der Daten (DT) in einem Sendedatenformat (SDTF) und eine Empfangsschnittstelle (ES) des empfangenden Computersystems (CS_{E}) zum Transport der Daten (DT) in einem Empfangsdatenformat (EDTF), übertragen werden,
**gekennzeichnet durch**:
**a**) Erzeugen (ezg) einer deklarativen Datentransformationsarchitektur (DTTA) im Zuge der Datenaustauschsteuerung zum Aufbereiten von für eine Weiterverarbeitung der übertragenen Daten (DT) durch das empfangende Computersystem (CS_{E}) zu erkennenden, mit der Übertragung der Daten (DT) transportierten Dateninformationen (DTI, DTI_{SDTF}), indem
**a1**) Dateninformationsmodelle der Schnittstellen, ein sendeschnittstellenbezogenes Dateninformationsmodell (DTIM_{SS}) sowie ein empfangsschnittstellenbezogenes Dateninformationsmodell (DTIM_{ES}), semantisch beschrieben (bsc) und dabei sendeschnittstellenbezogene Dateninformationssemantiken in einem ersten "Resource Description Framework <RDF>"-Format (F1) und empfangsschnittstellenbezogene Dateninformationssemantiken in einem zweiten "Resource Description Framework <RDF>"-Format (F2) dokumentiert (dkm) werden,
**a2**) eine Sendeschnittstelle-Annotation (SSA) zum regelbasierten Beschreiben eines Abbildens der zu transportierenden Dateninformation (DTI, DTI_{SDTF}) auf das sendeschnittstellenbezogene, semantische Dateninformationsmodell (DTIM_{SS}) implementiert (ipl) wird,
**a3**) eine Empfangsschnittstelle-Annotation (ESA) zum regelbasierten Beschreiben eines Abbildens der zu transportierenden Dateninformation (DTI, DTI_{SDTF}) auf das empfangsschnittstellenbezogene, semantische Dateninformationsmodell (DTIM_{ES}) implementiert (ipl) wird,
**a4**) ein Dateninformationsmodell-Mapping (DTIM-M) zum regelbasierten Abbilden des sendeschnittstellenbezogenen, semantischen Dateninformationsmodells (DIM_{SS}) auf das empfangsschnittstellenbezogene, semantische Dateninformationsmodell (DTIM_{ES}) implementiert (ipl) wird,
**b**) einen Ablauf des Datentransformationsarchitektur-basierten Aufbereitens der für die Weiterverarbeitung der übertragenen Daten (DT) durch das empfangende Computersystem (CS_{E}) zu erkennenden, mit der Datenübertragung transportierten Dateninformationen (DTI, DTI_{SDTF}), bei dem
**b1**) aus in dem Sendedatenformat (SDTF) transportierten Dateninformationen (DTI_{SDTF}) unter Einsatz der Sendeschnittstelle-Annotation (SSA) und dabei dem sendeschnittstellenbezogenen, semantischen Dateninformationsmodell (DTIM_{SS}) folgend in das erste "Resource Description Framework <RDF>"-Format (F1) überführte Dateninformationen (DTI_{F1}) erzeugt werden,
**b2**) aus den in das erste RDF-Format (F1) überführten Dateninformationen (DTI_{F1}) unter Einsatz <**i**> des sendeschnittstellenbezogenen, semantischen Dateninformationsmodells (DTIM_{SS}), <**ii**> des empfangsschnittstellenbezogenen, semantischen Dateninformationsmodells (DTIM_{ES}) und <**iii**> des Dateninformationsmodell-Mapping (DTIM-M) und dabei dem empfangsschnittstellenbezogenen, semantischen Dateninformationsmodell (DTIM_{ES}) folgend in das zweite "Resource Description Framework <RDF>"-Format (F2) überführte Dateninformationen (DTI_{F2}) erzeugt werden,
**b3**) aus den in das zweite RDF-Format (F2) überführten Dateninformationen (DTI_{F2}) unter Einsatz der Empfangsschnittstelle-Annotation (ESA) und dabei dem empfangsschnittstellenbezogenen, semantischen Dateninformationsmodell (DTIM_{ES}) folgend in das Empfangsdatenformat (EDTF) überführte Dateninformationen (DTI_{EDTF}) erzeugt werden, die zu den in dem Sendedatenformat (SDTF) transportierten Dateninformationen (DTI_{SDTF}) äquivalent sind.

2. Computerimplementiertes Verfahren nach Anspruch 1,
**dadurch gekennzeichnet, dass** die Schnittstelle-Annotation (SSA, ESA) zum regelbasierten Beschreiben des Abbildens der zu transportierenden Dateninformation (DTI, DTI_{SDTF}) auf das schnittstellenbezogene, semantische Dateninformationsmodell (DTIM_{SS}, DTIM_{ES}) gemäß einer "JavaScript Object Notation <JSON>-based Serialization for Linked Data <JSON-LD>"-Spezifikation ein Datenserialisierungs- und Nachrichtenformat zum Serialisieren von verknüpften Daten ist.

3. Computerimplementiertes Verfahren nach Anspruch 1 oder 2, **dadurch gekennzeichnet, dass**
das Dateninformationsmodell-Mapping (DTIM-M) zum regelbasierten Abbilden des sendeschnittstellenbezogenen, semantischen Dateninformationsmodells (DIM_{SS}) auf das empfangsschnittstellenbezogene, semantische Dateninformationsmodell (DTIM_{ES}) auf einer "Web Ontology Language <OWL>"-Spezifikation basiert.

4. Computerimplementiertes Verfahren nach einem der Ansprüche 1 bis 3, **dadurch gekennzeichnet, dass**
das Dateninformationsmodell-Mapping (DTIM-M) zum regelbasierten Abbilden des sendeschnittstellenbezogenen, semantischen Dateninformationsmodells (DIM_{SS}) auf das empfangsschnittstellenbezogene, semantische Dateninformationsmodell (DTIM_{ES}) auf einer "Shapes Constraint Language <SHACL>"-Spezifikation in Kombination mit einer "SPARQL Protocol And RDF Query Language <SPARQL>"-Spezifikation basiert.

5. Computerimplementiertes Werkzeug (CIW), insbesondere ein als APP ausgebildetes Computer-Programm-Produkt (CPP), zum Steuern eines Austauschs von Daten zwischen Computersystemen, bei dem Daten (DT) zwischen einem sendenden Computersystem (CS_{S}) und einem empfangenden Computersystem (CS_{E}) über zueinander inkompatible Schnittstellen, eine Sendeschnittstelle (SS) des sendenden Computersystems (CS_{S}) zum Transport der Daten (DT) in einem Sendedatenformat (SDTF) und eine Empfangsschnittstelle (ES) des empfangenden Computersystems (CS_{E}) zum Transport der Daten (DT) in einem Empfangsdatenformat (EDTF), übertragen werden, mit einem nicht-flüchtigen, lesbaren Speicher (SP), in dem prozessorlesbare Steuerprogrammbefehle eines Programm-Moduls (PGM) zum Steuern des Austauschs der Daten (DT) zwischen den Computersystemen (CS_{S},CS_{E}) gespeichert sind, und einem mit dem Speicher (SP) verbundenen Prozessor (PZ), der die Steuerprogrammbefehle des Programm-Moduls (PGM) zum Steuern des Austauschs der Daten (DT) zwischen den Computersystemen (CS_{S},CS_{E}) ausführt, **dadurch gekennzeichnet, dass**
das Programm-Modul (PGM) und der die Steuerprogrammbefehle des Programm-Moduls (PGM) zum Steuern des Austauschs der Daten (DT) zwischen den Computersystemen (CS_{S},CS_{E}) ausführende Prozessor (PZ) derart ausgebildet sind, dass
a) eine deklarativen Datentransformationsarchitektur (DTTA) im Zuge der Datenaustauschsteuerung zum Aufbereiten von für eine Weiterverarbeitung der übertragenen Daten (DT) durch das empfangende Computersystem (CS_{E}) zu erkennenden, mit der Übertragung der Daten (DT) transportierten Dateninformationen (DTI, DTI_{SDTF}) erzeugt (ezg) wird, indem
**a1**) Dateninformationsmodelle der Schnittstellen, ein sendeschnittstellenbezogenes Dateninformationsmodell (DTIM_{SS}) sowie ein empfangsschnittstellenbezogenes Dateninformationsmodell (DTIM_{ES}), semantisch beschrieben (bsc) und dabei sendeschnittstellenbezogene Dateninformationssemantiken in einem ersten "Resource Description Framework <RDF>"-Format (F1) und empfangsschnittstellenbezogene Dateninformationssemantiken in einem zweiten "Resource Description Framework <RDF>"-Format (F2) dokumentiert (dkm) werden,
**a2**) eine Sendeschnittstelle-Annotation (SSA) zum regelbasierten Beschreiben eines Abbildens der zu transportierenden Dateninformation (DTI, DTI_{SDTF}) auf das sendeschnittstellenbezogene, semantische Dateninformationsmodell (DTIM_{SS}) implementiert (ipl) wird,
**a3**) eine Empfangsschnittstelle-Annotation (ESA) zum regelbasierten Beschreiben eines Abbildens der zu transportierenden Dateninformation (DTI, DTI_{SDTF}) auf das empfangsschnittstellenbezogene, semantische Dateninformationsmodell (DTIM_{ES}) implementiert (ipl) wird,
**a4**) ein Dateninformationsmodell-Mapping (DTIM-M) zum regelbasierten Abbilden des sendeschnittstellenbezogenen, semantischen Dateninformationsmodells (DTIM_{SS}) auf das empfangsschnittstellenbezogene, semantische Dateninformationsmodell (DTIM_{ES}) implementiert (ipl) wird,
**b**) das Datentransformationsarchitektur-basierte Aufbereiten der für die Weiterverarbeitung der übertragenen Daten (DT) durch das empfangende Computersystem (CS_{E}) zu erkennenden, mit der Datenübertragung transportierten Dateninformationen (DTI, DTI_{SDTF}) derart abläuft, dass
**b1**) aus in dem Sendedatenformat (SDTF) transportierte Dateninformationen (DTI_{SDTF}) unter Einsatz der Sendeschnittstelle-Annotation (SSA) und dabei dem sendeschnittstellenbezogenen, semantischen Dateninformationsmodell (DTIM_{SS}) folgend in das erste "Resource Description Framework <RDF>"-Format (F1) überführte Dateninformationen (DTI_{F1}) erzeugt werden,
**b2**) aus den in das erste RDF-Format (F1) überführte Dateninformationen (DTI_{F1}) unter Einsatz <**i**> des sendeschnittstellenbezogenen, semantischen Dateninformationsmodells (DTIM_{SS}), <**ii**> des empfangsschnittstellenbezogenen, semantischen Dateninformationsmodells (DTIM_{ES}) und <**iii**> des Dateninformationsmodell-Mapping (DTIM-M) und dabei dem empfangsschnittstellenbezogenen, semantischen Dateninformationsmodell (DTIM_{ES}) folgend in das zweite "Resource Description Framework <RDF>"-Format (F2) überführte Dateninformationen (DTI_{F2}) erzeugt werden,
**b3**) aus den in das zweite RDF-Format (F2) überführten Dateninformationen (DTI_{F2}) unter Einsatz der Empfangsschnittstelle-Annotation (ESA) und dabei dem empfangsschnittstellenbezogenen, semantischen Dateninformationsmodell (DTIM_{ES}) folgend in das Empfangsdatenformat (EDTF) überführte Dateninformationen (DTI_{EDTF}) erzeugt werden, die zu den in dem Sendedatenformat (SDTF) transportierten Dateninformationen (DTI_{SDTF}) äquivalent sind.

6. Computerimplementiertes Werkzeug (CIW) nach Anspruch 5, **dadurch gekennzeichnet, dass**
die Schnittstelle-Annotation (SSA, ESA) zum regelbasierten Beschreiben des Abbildens der zu transportierenden Dateninformation (DTI, DTI_{SDTF}) auf das schnittstellenbezogene, semantische Dateninformationsmodell (DTIM_{SS}, DTIM_{ES}) gemäß einer "JavaScript Object Notation <JSON>-based Serialization for Linked Data <JSON-LD>"-Spezifikation ein Datenserialisierungs- und Nachrichtenformat zum Serialisieren von verknüpften Daten ist.

7. Computerimplementiertes Werkzeug (CIW) nach Anspruch 5 oder 6, **dadurch gekennzeichnet, dass** das Dateninformationsmodell-Mapping (DTIM-M) zum regelbasierten Abbilden des sendeschnittstellenbezogenen, semantischen Dateninformationsmodells (DIM_{SS}) auf das empfangsschnittstellenbezogene, semantische Dateninformationsmodell (DTIM_{ES}) auf einer "Web Ontology Language <OWL>"-Spezifikation basiert.

8. Computerimplementiertes Werkzeug (CIW) nach einem der Ansprüche 5 bis 7, **dadurch gekennzeichnet, dass** das Dateninformationsmodell-Mapping (DTIM-M) zum regelbasierten Abbilden des sendeschnittstellenbezogenen, semantischen Dateninformationsmodells (DIM_{SS}) auf das empfangsschnittstellenbezogene, semantische Dateninformationsmodell (DTIM_{ES}) auf einer "Shapes Constraint Language <SHACL>"-Spezifikation in Kombination mit einer "SPARQL Protocol And RDF Query Language <SPARQL>"-Spezifikation basiert.

9. Computersystem (CS, CS_{S}, CS_{E}), mit einer als Central Processing Unit <CPU> bezeichnete Zentralen Prozessoreinheit (ZPE),
**gekennzeichnet durch**
ein computerimplementiertes Werkzeug (CIW) nach einem der Anspruche 5 bis 8, das zur Durchführung des Verfahrens nach einem der Ansprüche 1 bis 4 in die Zentrale Prozessoreinheit (ZPE) ladbar ist.

10. Computersystem (CS, CS_{S}, CS_{E}) nach Anspruch 9, **gekennzeichnet durch**:
ein im Zuge eines Datenaustauschs zwischen Computersystemen vorhandenes, sendendes Computersystem (CS_{S}) zum Senden von Daten (DT) und/oder ein im Zuge eines Datenaustauschs zwischen Computersystemen vorhandenes, empfangendes Computersystem (CS_{E}) zum Empfangen von Daten.

11. Computersystem (CS, CS_{S}, CS_{E}) nach Anspruch 9, **gekennzeichnet durch**:
ein eigenständiges Computersystem (CS), das unabhängig von einem im Zuge eines Datenaustauschs zwischen Computersystemen vorhandenen, sendenden Computersystem (CS_{S}) zum Senden von Daten (DT) und/oder einem im Zuge eines Datenaustauschs zwischen Computersystemen vorhandenen, empfangenden Computersystem (CS_{E}) zum Empfangen von Daten (DT) betrieben wird, aber zur Steuerung des Datenaustauschs sowohl dem sendenden Computersystem (CS_{S}) als auch dem empfangenden Computersystem (CS_{E}) zugeordnet wird.
